**Europäisches Patentamt**

**European Patent Office**

**Office européen des brevets**

(11) Numéro de publication: **0 011 071**
**A1**

(12) # DEMANDE DE BREVET EUROPEEN

(21) Numéro de dépôt: **78400181.0**

(22) Date de dépôt: **15.11.78**

(51) Int. Cl.³: **H 01 M 4/74**
**H 01 M 4/08, C 25 D 9/06**
**C 25 D 13/02**

(43) Date de publication de la demande:
**28.05.80 Bulletin 80/11**

(84) Etats Contractants Désignés:
**BE CH DE GB**

(71) Demandeur: **SORAPEC Société de Recherches et d'Applications Electrochimiques**
**66 rue Ramus**
**F-75020 Paris(FR)**

(72) Inventeur: **SORAPEC Société de Recherches et d'Applications Electrochimiques**
**66 rue Ramus**
**F-75020 Paris(FR)**

(54) **Electrode au bioxyde de manganèse pour générateurs électrochimiques et procédés de fabrication.**

(57) Electrode positive comportant du bioxyde de manganèse fixé sous forme d'un dépôt sur un support en fibres conductrices du type tissage ou feutre, tel qu'en carbone ou en graphite. Le dépôt du bioxyde de manganèse est effectué par électrolyse d'une solution contenant un sel de manganèse, par électrophorèse ou par imprégnation du support avec une solution contenant du bioxyde de manganèse en suspension.

EP 0 011 071 A1

./...

Croydon Printing Company Ltd.

PILES ELECTROCHIMIQUES          TITRE MODIFIÉ
voir page de garde

L'invention, objet du présent brevet concerne les piles électrochimiques. Elle s'applique plus particulièrement aux générateurs dont l'électrode positive est dépolarisée par du bioxyde de manganèse.

Dans de tels générateurs, la masse positive, de par sa structure, est à l'origine d'un certain nombre d'inconvénients que la présente invention a pour objectif de pallier.

Dans les piles actuelles à cathode au bioxyde de manganèse, l'architecture classique de l'électrode positive comprend, autour d'un collecteur de courant positif constitué par un barreau de graphite, une masse de noir de carbone et de bioxyde de manganèse. Dans cette masse où le bioxyde de manganèse tient le rôle du dépolarisant mais présente une très mauvaise conductibilité électronique, le noir de carbone est précisément utilisé pour ses propriétés de conducteur électronique.

Pour une efficacité maximale du dépolarisant, chacune de ses particules doit être en contact intime avec des particules de noir de carbone, assurant la conduction. Le volume dévolu au dépolarisant ne peut ainsi normalement dépasser environ 60 % de celui de la masse positive. Pour atteindre les capacités souhaitées pour le type de générateur en question, il est par conséquent nécessaire de consacrer un fort volume à la masse, ce qui n'est pas sans inconvénient et interdit pratiquement l'utilisation de ce procédé pour la réalisation de "piles miniaturisées".

De surcroît, le rendement obtenu est mauvais car toutes les particules de bioxyde de manganèse ne sont pas appelées à travailler de la même façon : en effet, la résistance que rencontre le courant sur l'itinéraire qui sépare chaque particule du collecteur croît avec la distance du fait de la conductibilité imparfaite du noir de carbone. Les parti-

cules les plus proches du collecteur seront donc épuisées et la pile "déchargée" avant que les particules les plus éloignées aient pu être utilisées.

La présente invention permet de pallier l'ensemble de ces inconvénients grâce au remplacement du noir de carbone par un réseau de fibres du type tissage ou feutre conducteur, servant de support à un dépôt de bioxyde de manganèse et placé au contact du collecteur de courant.

On s'attachera, à titre d'exemple non limitatif d'application du procédé, objet du présent brevet, à mettre en évidence les avantages de celui-ci par rapport au dispositif habituel dans le cas de l'utilisation d'un feutre de carbone, et on décrira un mode de réalisation préférentiel de la masse, n'ayant aucun caractère restrictif.

Selon ce procédé de fabrication qui consiste en une électrodéposition du bioxyde de manganèse sur le feutre, le dépolarisant produit par électrolyse peut être formé à l'anode de la cuve électrolytique directement sur le feutre de carbone qui sera ultérieurement utilisé dans la pile. L'électrolyte utilisé pourra notamment être une solution molaire de sulfate de manganèse et d'acide sulfurique. L'électrolyse est effectuée à une température de 90°C, sous une densité de courant de 10 mA par centimètre carré de surface apparente de feutre. On peut rappeler ici qu'il existe différentes variétés de bioxyde de manganèse; parmi les plus actives en tant que dépolarisant pour piles électriques se trouve celle qui est obtenue par voie électrolytique.

Il est donc particulièrement intéressant d'utiliser cette variété et de la former directement, comme cela est possible, sur le feutre de carbone. On réduit ainsi notablement le nombre des opérations de préparation par rapport à la réalisation d'une masse positive classique.

Il convient de signaler que d'autres procédés de fabrication peuvent être utilisés, parmi lesquels les formations de dépôt sur le feutre par électrophorèse ou imprégnation dans une solution de bioxyde de manganèse en suspension.

Le dépôt obtenu sur le feutre, qui présente une grande homogénéité et régularité, offre des avantages considérables par rapport à la masse positive classique.

Ainsi, le volume laissé libre à l'intérieur du feutre, volume qu'il est donc possible de remplir de bioxyde de manganèse, peut représenter plus de 80 % de l'ensemble.

Par ailleurs, l'avantage essentiel consiste en une possibilité d'accroissement considérable de la capacité du fait de la structure même de la nouvelle masse. En effet, le dépôt pulvérulent se fixe directement et de façon très intime sur les fibres du feutre. Le cheminement du courant se faisant le long et par chacune des fibres du feutre, cette structure permet l'obtention d'une grande homogénéité du champ électrique, toutes les particules du dépôt pulvérulent de bioxyde de manganèse travaillant de la même manière et au rendement maximal.

Le procédé, objet du présent dépôt, apporte donc par rapport à la masse positive classique de noir de carbone et bioxyde de manganèse une meilleure répartition du champ électrique dans l'ensemble de la nouvelle masse. Des gains considérables de capacités massique et volumique sont réalisés. Les caractéristiques de décharge d'un élément ainsi constitué s'avèrent beaucoup plus constantes au cours du fonctionnement dans le temps que dans le cas des piles à masse positive classique.

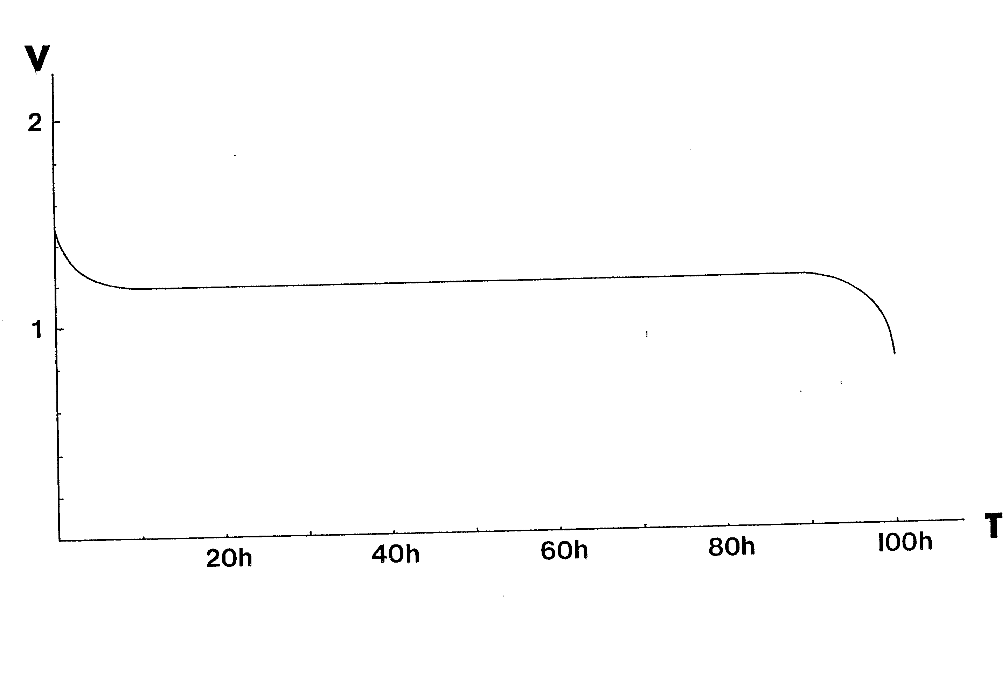

Les courbes de décharge obtenues sont du type de celle représentée par la figure 1, qui correspond au fontionnement d'une "micropile" de I cm2 de surface utile sous I mA. Elles présentent un palier situé à I,2 V que ne permettent pas d'obtenir les masses positives classiques au bioxyde de manganèse.

La réalisation de gains volumiques par ce procédé permet l'adaptation de la pile à cathode au bioxyde de manganèse associée à divers types d'anode, par exemple de zinc, à la conception et à la fabrication de piles miniaturisées, de même qu'elle permet d'améliorer les performances des piles de type Leclanché.

L'utilisation d'un feutre ou d'un tissage conducteur peut également être étendue aux accumulateurs à plomb, comme support d'un dépôt de bioxyde de plomb. Naturellement, et comme il résulte d'ailleurs largement de ce qui précède, l'invention n'est limitée ni aux exemples de réalisation ni aux modes d'obtention qui ont été décrits en exemple, mais en embrasse toutes les variantes.

REVENDICATIONS DE BREVET

1 - Masse positive au bioxyde de manganèse, le générateur électrique, caractérisée par le fait que le bioxyde de manganèse est fixé sous forme d'un dépôt sur un réseau de fibres conductrices du type tissage ou feutre, placé au contact d'un collecteur de courant positif.

2 - Masse au bioxyde de manganèse selon la revendication 1 caractérisée par le fait que le réseau de fibres conductrices est un feutre de graphite ou carbone.

3 - Masse au bioxyde de manganèse, selon la revendication 1, caractérisée par le fait que le réseau de fibres conductrices est un tissage de graphite ou carbone.

4 - Masse selon les revendications 1, 2 et 3 caractérisée par le fait que le dépôt de bioxyde de manganèse est effectué directement sur le feutre ou tissage placé en anode dans une cuve d'électrolyse contenant un sel de manganèse.

5 - Masse selon les revendications 1, 2 et 3 caractérisée par le fait que le dépôt de bioxyde de manganèse est effectué par électrophorèse, ou par imprégnation du feutre ou tissage dans une solution contenant du bioxyde de manganèse en suspension.

| Catégorie | Citation du document avec indication, en cas de besoin, des parties pertinentes | Revendication concernée |
|---|---|---|
| X | FR - A - 465 011 (R.P. BARBIER)<br><br>* résumé, point 1,2,3,4; page 1, lignes 30-58; page 2, lignes 1-13 et 38-41, figure *<br><br>--- | 1,3,4 |
| | FR - A - 1 521 772 (GENERAL ELEC-TRIC COMP.)<br><br>* résumé, point 1, exemple 14 (page 7) *<br><br>--- | 5 |
| | US - A - 3 485 677 (R.R. BALAGUER)<br><br>* de colonne 1, ligne 67- colonne 2, ligne 21; colonne 2, lignes 55-64 *<br><br>--- | 2,3 |
| | FR - A - 1 114 316 (CAROLINE-ELI-SABETH-STIFTUNG)<br><br>* résumé, point 1 e,f; page 1, de colonne de gauche, dernier paragraphe à colonne de droite, paragraphe 4 *<br><br>--- | 1,2 |
| A | US - A - 3 481 790 (J.C. DUDDY)<br><br>* colonne 2, lignes 49-53 et lignes 65-71 *<br><br>--- | |
| A | FR - A - 2 119 372 (BRENET J. ET RUCH JEAN)<br><br>* revendications 1,2,5; page 4, lignes 2-7 * | ./. |

**CLASSEMENT DE LA DEMANDE (Int. Cl.²)**

H 01 M 4/74
H 01 M 4/08
C 25 D 9/06
C 25 D 13/02

**DOMAINES TECHNIQUES RECHERCHES (Int. Cl.²)**

H 01 M 4/08
4/06
4/50
4/74
4/64
4/66
4/02
4/04
6/06

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

☒ Le présent rapport de recherche a été établi pour toutes les revendications

| Lieu de la recherche | Date d'achèvement de la recherche | Examinateur |
|---|---|---|
| La Haye | 06-07-1979 | D'HONDT |

OEB Form 1503.1 06.78

**Office européen des brevets**

# RAPPORT DE RECHERCHE EUROPEENNE

| Categorie | Citation du document avec indication, en cas de besoin, des parties pertinentes | Revendication concernée |
|---|---|---|
| A | US - A - 3 748 184 (R.R. WITHER-SPOON)<br><br>* revendication 1 *<br><br>---------- | 5 |

**CLASSEMENT DE LA DEMANDE (Int. Cl.²)**

**DOMAINES TECHNIQUES RECHERCHES (Int. Cl.²)**

OEB Form 1503.1   03.78